# EUROPEAN PATENT SPECIFICATION

(11) **EP 1 332 113 B1**
(45) Date of publication and mention of the grant of the patent: **31.08.2005**
(21) Application number: 01975131.2
(22) Date of filing: 10.10.2001
(51) Int. Cl.: C02F 3/02, C02F 3/34, C02F 1/40

(54) **PROCESS FOR FAT SEPARATION**
VERFAHREN ZUR ABTRENNUNG VON FETT
PROCEDE POUR SEPARER DES GRAISSES

(30) Priority: 10.10.2000 SE 0003677
(43) Date of publication of application: 06.08.2003
(73) Proprietor: Biohygien I Sverige AB, 187 12 Täby (SE)
(72) Inventor: AXELSSON, Niklas, Wihelm, S-186 21 Vallentuna (SE)
(86) International application number: PCT/SE2001/002207
(87) International publication number: WO 2002/030832

(56) References cited:
- EP-A1- 0 546 881
- WO-A1-97/34840

## Description

Wastewaters from restaurants, bakeries, food processing industries etc. contain much fat. The fat, which at first is of low viscosity and often emulsified, becomes separated and solidifies, when the wastewater gets cold. The solidified fat often causes stoppage in the sewers. Especially stoppages are caused by the part of the fat that is usually called separable fat, i.e. fat dispersed in the shape of drops or in unstable emulsions.

Most municipalities with municipal sewage nets, receiving wastewater from restaurants and food processing industries, with high fat content in the wastewater, are limiting the fat concentration in the wastewater and demand installation of fat separators to maintain the limit. Fat separators take care of the separable fat, mainly.

Beside the separable fat the wastewater contains several other substances in dissolved or suspended form as surfactants and alkali from cleaning agents, starch, proteins and fibres from food rests etc. Surfactants and alkali contribute to create stable emulsions with fat. This means that a considerable part of the fat cannot be separated from the wastewater. This well emulsified fat seldom causes problems in the sewage systems.

In the fat separator the fat is separated as a solid comparatively hard cake contaminated with other substances. When the fat separator's space for fat is full, it has to be emptied. Before emptying, the fat cake has to be broken up. More often than not it happens that this breaking up does not became good enough to allow all fat to be eliminated. Remaining fat pieces follow the wastewater and gather in the parts of the sewer where the current is weak, and form with other contaminant stoppages, causing at least as large problems as the fat stoppages mentioned.

The separated fat contains large amounts of both un-saponified and saponified fat. Such a mixture is very unfavourable from the reworking point of view especially as the reworking is disturbed by the contaminants mentioned. Usually the separated fat has to be disposed of.

Many trials have been done to decompose the fat, to be more easily handled, by using enzymes and several other chemicals. The decomposition products, which are soluble or form stabile dispersions in water, do not cause problems in the sewer and give no problems in the sewage works. Exceptions from this rule are fatty acids, which are said to cause growth of so-called filiform bacteria, which may cause sludge swelling and sludge escape. The success with enzymes has been limited. Chemicals of other kinds are often causing problems in the conduits and in the sewage works.

Trials with living bacteria cultures have been more successful. Especially have cultures with a broad spectrum of starch degrading, protein degrading and fat degrading bacteria shown good results. European patent application No. 0 546 881, French patent application No. 2 659 645 and French patent application No. 2 708 923 treat some different aspects of this technique. Of those publications EP 0 546 881 and FR 2 708 923 relates to the treatment of fat in the diluted form that is found in wastewater, while FR 2 695 645 relates to fat that has been separated from wastewater by flotation.

European patent application No. 0 546 881 refers to an equipment comprising a fat separator provided with baskets containing granulate for retaining of biomass. The baskets are suspended over a ramp for injecting air by nozzles. The fat separator is periodically fed with biomass containing microorganisms from a bioreactor. The addition is done from above at the inlet of the fat separator.

French patent application No. 2 708 923 refers to a very complicated system comprising a pre-treatment container for physical conditioning of the waste water by aeration, roundpumping and addition of chemicals to achieve correct pH. The purpose of the pre-treatment is that the fat should arrive to the treatment tank completely emulsified and totally liberated from heavy sludge. In the treatment tank too, aeration and roundpumping are done. Beside that germ bacteria are added, when needed. This addition is done at the surface and close to the inlet. The system is a downright destruction system for fat and lacks completely arrangement making it possible satisfactorily to collect fat, while fat-free waste water is allowed to pass. Swedish patent publication 507 020 (9601090-6) and PCT/SE97/00486 (WO 97/34840), with the same inventor as the present application, refers to a developed fat separator, where addition of bioculture is done in an intermediate layer between the fat phase and the sludge phase with the aid of a pipe system extending along the main part of the separator.

The basic idea behind the invention, which is the theme of those two latter patent publications, is that one may eliminate the disturbance that poisoning and degeneration of the bio-culture may cause, by a well-planned distribution of the bio-culture, to renew the colonies in the whole system continuously. In these publications, too, aeration is mentioned for maintaining aerobic conditions in the fat separator.

From the efficiency point of view installations according to the last mentioned publication function very well. The installations require new constructions of fat separators or extensive modifications of existing fat separators. They have also shown to be hard to control from the operation point of view, inter alia, as choking of the exhaust passages may disturb the distribution of bio-culture.

Systems according to Swedish patent publication 507 020 (9601090-6) and PCT/SE97/00486 (WO 97/34840) reduce the fat volume, but require in spite of that emptying at comparatively short intervals. Restaurants are as a rule in areas with high people density and often in old settlements, where heavy transports have difficulties to pass. The comparably low value of the recovered fat is seldom enough to compensate for the troubles.

Thus a system would be preferred, where, if practically possible, the fat in the wastewater is eliminated in direct connection to the restaurant or similar, where the wastewater is generated. Even such a system must be drained now and then as the wastewater also contains components, which cannot be broken down by the biologic methods used for the organic material. However, such drainage will be needed more seldom and causes fewer problems in other respects, too.

Studies of the market show that systems of this kind must be simple and easy to control. They should also be possible to be prepared and installed in existing fat separators at normal short shutdowns.

Therefor, the inventor has studied the process in detail, to use the experiences from the operation of plants according to the mentioned publications to achieve a system that, if the local conditions permit, reduces the amount of separated fat that has to be taken care of, to make the need for drainage of the fat separator to appear less frequently.

The work has resulted in a completely new type of process and equipment that, in all essential respects, differ from what is earlier known. The equipment combines a common separator and a modern bioreactor. These two functions are used at different periods. When fat containing wastewater is added, the system acts as a conventional fat separator and corresponds to all demands that may be made upon a well functioning one. During the periods when no addition of wastewater happens, the function of the equipment is changed over to correspond to a modern bioreactor, which achieves an intensive biological break down of all available organic material. The transition comprises addition of a liquid starter culture containing a suitable mixture of living microorganisms, which are evenly distributed in the reactor with the aid of air injection. The reaction is supported by continued air injection until the equipment's separator function is needed one again.

As starter culture in the trials one has used a liquid microbe mixture containing bacteria and/or fungi, with lipolytic, amolytic and proteolytic effect, such as the one described below and in the mentioned PCT-application. However, mixtures with a broader spectrum may probably show to be more suitable. Of course the invention concerns use of such mixtures, too.

In principle the addition of liquid microbe culture may be done anywhere in the parts of the reactor affected by the air injection. However, it is important that the addition occurs in a water volume with high turbulence. The highest turbulence occurs close to the air injection. Thus, combining the addition system for liquid microbe culture with the addition system for air is suitable. This means that both air and microbe culture is injected in an intermediate layer between the fat layer and the sludge layer in the reactor. No need for the in mentioned PCT-application described distribution along the fat separator exists.

An essential difference in comparison to earlier publications with respect to fat separation is that the air injection does not solely concerns maintaining aerobic conditions. Instead it must have enough intensity to achieve an effective mixing in the whole reactor, inclusive the fat layer separated when the equipment has operated as a conventional fat separator. This means a main difference in comparison to the mentioned PCT-publication. At the execution of this invention, which, inter alia, comprises elements for recovering separated fat, the air injection has to be carefully controlled not to cause unwanted break down of the fat. This means, inter alia, that the time for air injection has to be limited to what is needed to avoid unpleasant smell. This differs from systems according to this new invention, where air injection with enough intensity to cause effective mixing is required during the entire time when the equipment functions as bioreactor.

Microorganisms with capacity to split proteins, starch and fat are not found among bacteria, only, but also among fungi, for instance. Often fungus cultures can be superior to bacteria cultures. For instance, fungus cultures are characterised by higher tolerance for toxins and have higher reaction rates. In a preferred embodiment of this invention the microbe culture consists at least in part of fungus culture.

The present invention concerns a process for separating separable fat from wastewater and reducing the amount of separable fat of which has to be taken care of. At the process a specially equipped container is used. The equipment makes it possible to use the container alternatively as a separator and bioreactor. During a separator phase fat is collected in the usual way in the, for separated fat intended, volume in the container. After a changeover to bioreactor function this fat is biologically broken down wholly or partly. To start breaking down a liquid culture of suitable microorganisms is added at the changeover to bioreactor function. The bio-culture is mixed efficiently with the content in the container by air injection in an intermediate layer that lays over the sludge layer and under the floating fat layer in the fat separator/bio-reactor proper. To maintain the biological process and intensify the break down and mixing, air should be blown in during the entire time when no new wastewater is added to the container. The changeover to separator function is done by shutting off the air injection.

The system is very simple and reliable. It demands no control of pressure drop in pipes and is principally immune to disturbances due to choking in pipes and/or nozzles. Automatic operation control is easy to achieve with conventional guiding systems founded on, for instance, time or flow control.

The invention breaks through the prejudice regarding the need for solid surfaces for the microorganisms expressed in some earlier publications. The system of the invention does not demand pre-treatment of the wastewater. Instead needed decomposition and elimination of fat for complete break down occur directly within the biological process under influence of the air injection.

Fat separators according to the invention are firsthand intended for use at restaurants and food industries. In such plants one has as a rule an operation pattern with a 24-hours rhythm comprising a shorter or longer period with addition of wastewater to the separator and a comparably long, coherent period without such addition. Usually these periods are clearly defined regarding time. The process of the invention is easy to adapt to this by arranging that the bio-reactor functions, i.e. addition of bio-culture and air injection are used during such time, only, when no addition of waste water is done. This is done not to disturb the separator function. The normal operating pattern for a system according to the invention is that when the staff is leaving the plant and the water addition has ceased the injection of a bio-culture and air injection starts simultaneously. When the required amount of bio-culture has been added, this injection stops. The air injection continues until a new operation period in the restaurant or plant is beginning. Thus, during the periods when waste water is added the fat separator functions as a conventional separator and the fat layer respectively the sludge layers build up simultaneously as the bio-culture is diluted. When the operation is shut down for the day the functions are changed over to let the central parts of the fat separator work as a bioreactor, where the added microorganisms attack and break down the fat layer. During this period the air injection has the purpose to:
1. disintegrate the fat layer to make the fat easily available for the microorganisms, i.e. increase the bio-availability of the fat;
2. achieve efficient oxygenation;
3. achieve an even microorganism distribution by good mixing;
4. even out pH-variations.

The process means a combination in the same container of a continuous separator function during the operating periods and a batch-wise bio-rector function during the daily shut down. If the operation conditions do not include a daily shutdown, the separator should be doubled. This may be the case at use in connections, where the operation continues on 24-hour basis, as in industries with shift working and some real estates and public institutions.

Further the invention concerns equipment for completing a conventional fat separator with the mentioned bioreactor function in a simple way. In its outline this equipment comprises a system for adding liquid bio-culture and a system for air injection in the intermediate layer between the fat layer and the sludge layer. Further suitable system for dosing bio-culture and steering the air injection should be added. For dosing of bio-culture a simple tube pump may be sufficient, as the addition can be done via an open pipe, which does not cause an appreciable pressure drop. If a system for pressurised air does not exist, an air pump or a ventilator, giving enough pressure, is needed, too.

A common fat separator consists of a container of suitable material. Usually, the container's length is larger than its width. As a rule, the container is divided in two to three compartments by transverse walls. The walls do not rise to the container's whole wet height. In the first compartment counted from the inlet a coarse separation of sludge takes place, in the following compartment break down and fat separation occurs. Usually the fat separator has a manhole at its upper side.

The volumes of the containers differ very much. The smallest ones may have a volume of just 25 litres. However containers exist that combine the fat separation function with flow equalisation. Such containers may have volumes of 200 cubic metres or more. For very small containers the required amount of air may be 1 litre per minute. For larger containers the air quantity may be 2500 litres per minute. More usual intervals lay between 10 litres per minute and 500 litres per minute. The air volume should be large enough to obtain a fast and good mixing and dispersion of the fat layer. The required amount bio-culture per dosing may be between 10 ml and 4000 ml or more common between 10 ml and 1500 ml.

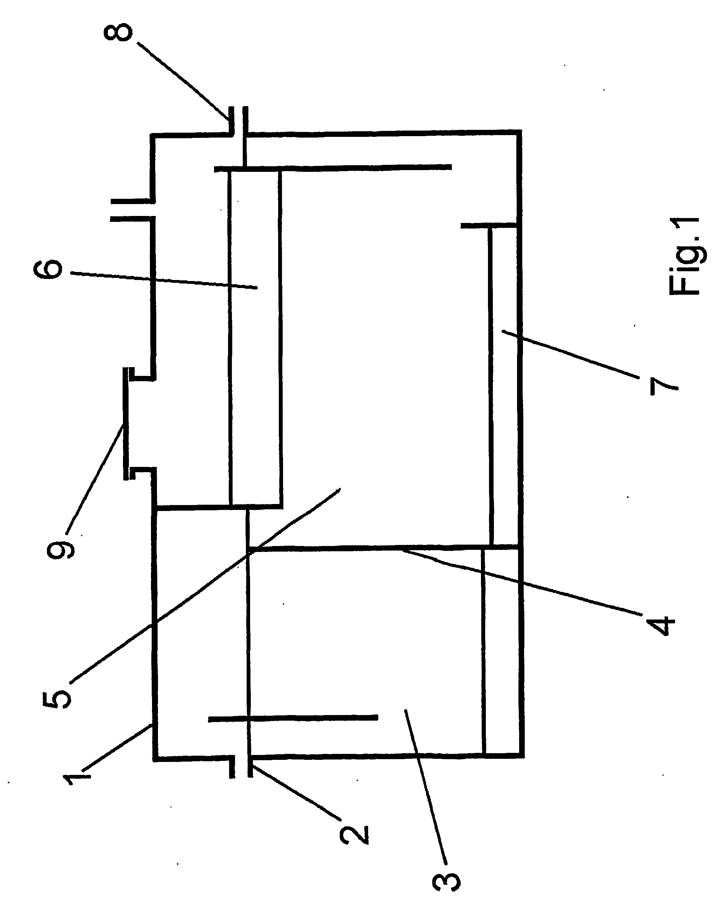

Fig. 1 shows the principles for a conventional fat separator schematically.

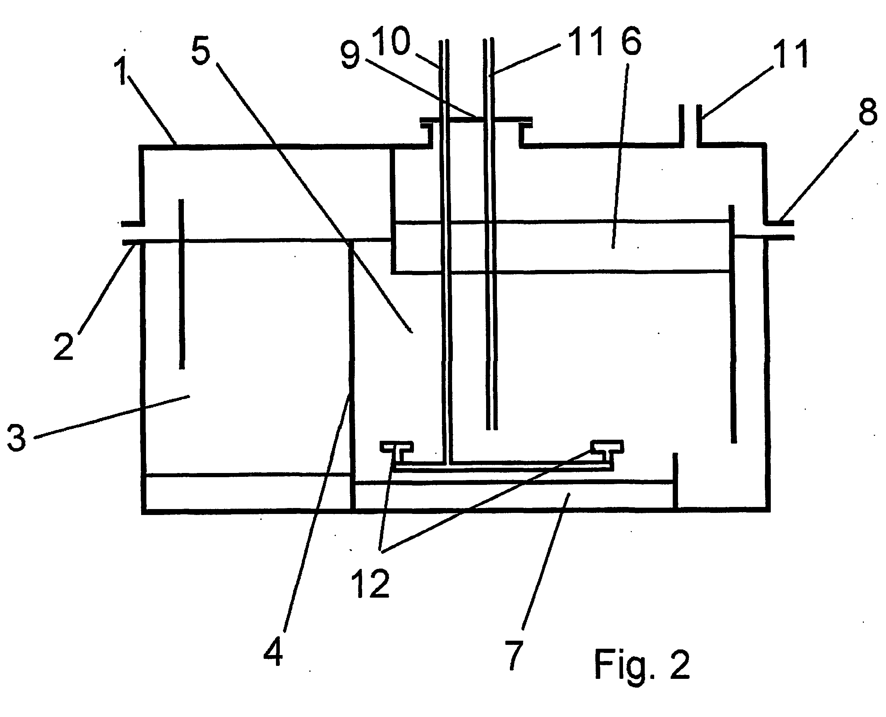

Fig. 2 shows how the fat separator of figure 1 can be converted to a fat separator/bioreactor according to the invention.

In the figures (1) stands for the container, (2) for the inlet to the separator, (3) for the coarse separation zone, (4) for a transverse wall separating the coarse separation from the water zone (5), (6) for the fat zone, (7) for the sludge zone, (8) stands for the outlet for waste water, (9) for a man hole. (10) is a pipe system that adds liquid microbe culture to the separator, (11) is a pipe system for air injection and (12) perforated plates for air distribution.

Acid-resistant steel and fibre-reinforced plastic are usually considered as suitable material for fat separators. Microbes thrive better at plastic surfaces than at acid acid-resistant steel. Fibre-reinforced plastic is preferred. When converting existing separators acid-resistant steel may be unavoidable. The intense mixing that the process according to the invention causes seems to eliminate the toxicity. This may be caused by the fact that the main part of the biologic activity occurs in the mixing zone. When suitable the toxicity of the acid-resistant steel may be eliminated by spraying with a suitable plastic. Another suitable material may be steel covered with plastic.

The figure shows perforated plates for air distribution. Such plates may have perforations with holes between 0,1 and 10 mm. more usual and preferred is 1 to 5 mm. As the aeration does not solely concern oxygenation but also mixing the dimensions of the holes is not critical. Also, using plates is not necessary.

Perforated hoses or tubes are just as suitable. If the separator has a horizontal surface large enough to cause danger for stagnant zones, the air injection should be done at several places distributed over the surface. In this way vertical circulation streams are obtained. The streams interfere with each other and cause that the content in the fat separator/bioreactor is homogenised. However, the air injection should be limited to the fat separator part, i.e. water zone and fat zone. The sludge layer in the coarse separator zone should if possible be left untouched. Of course, the sludge layer below the water zone will to large extent be whirled up at the air injection but experience has shown this to be no large drawback.

Microorganisms suitable for fat elimination are sensible for as well high as low pH. Optimal activity conditions can be found in the pH-range 6.5 to 8.5. Waste water from dish washing machines and other cleaning in restaurants and food processing industries often contains an alkali hydroxide. Surplus of fat and other reactive substances react fast with the alkali. At the inlet to the fat separator pH is seldom higher than 8 to 9. Thus, inlet-pH may be too high for optimal activity. However, this is no problem in a system where the bioactivity is optimised to let a substantial part occur during a daily shutdown. A larger problem has earlier been that acids are let free, inter alia, caused by the microbial activity and that pH therefore rapidly sinks to less than 6 and thus under the level suitable for optimal activity.

Observations show that this problem is much less at this new process. Probably this is because this process results in a more thorough break down than as, for instance, the process of earlier mentioned Swedish patent and PCT-application, where the break down mainly stops at freeing the fatty acids from the glycerine part. Further support for this hypothesis is that at moderately loaded fat separators in for instance schools and similar no build up of a fat layer in the separator occurs. This may be caused by that the fatty acids are broken down to water soluble chain length or that an essential part of the fatty acids is broken down to carbon dioxide and water. The observations regarding pH hint at the latter alternative. The need for draining is strongly reduced. Simultaneously the mentioned problem with fatty acids in the sewage works is eliminated.

Even so pH-control and ph-stabilisation may be suitable. This concerns especially intensely loaded fat separators that may occur at some large restaurants. Glass electrodes may be used, but put high demands on supervising and cleaning. Measurement of conducting capacity can be used as a satisfactory alternative, after calibrations for each separate plant, and exhibits substantially fewer maintenance problems. Dosing devices governed by pH-control and adapted for suitable pH-stabilising chemicals should be installed in such plants.

Using suitable buffer salts, especially bicarbonate and mono respectively dihydrogenphosphate can do stabilising. Stabilising of pH with the aid of phosphates, especially ortophosphates, is preferred.

Another econornically more advantageous alternative is to use a calcium carbonate, for instance as slurry of chalk and/or marble flour.

Still another alternative that, beside pH-adjusting activity, improves the growth conditions for the microbe species is to add small amounts of ammonia to the air used for the oxygenation. The substrates for the microbes show low levels of available nitrogen and therefore the growth of biomass becomes better if ammonia is added. The addition may be done from a pressure container and be controlled by a suitably designed magnetic valve.

Beside the sensitivity for high and low pH the microbes are very sensitive to active chlorine. Thus, the use of chlorine containing cleaning agents must be avoided. However the risk of poisoning is much lower at the process of the invention, as reacting with organic material in the dirt eliminates chlorine compounds rather fast. This causes that addition of chlorine compounds does not poison the microorganisms, if the addition does not happen in close connection with the changeover from fat separator function to bioreactor function. Optimal temperature for the microbes lies within the range 32 to 37 °C. Fat separators are usually placed at low-temperature surroundings and some isolation of the tank may be suitable. Measures may be needed to prevent hot wastewater from increasing the temperature too much temporarily. If the temperature in the surroundings of the separator is too low means for warm keeping, for instance with the aid of electricity, should be installed

## Claims

1. Process for separating separable fat from fat containing waste water and reducing the amount of separated fat that has to be taken care of from restaurants, bakeries, food industries etc. by biodegradation with the aid of a liquid culture of microorganisms **characterised in that** the fat containing waste water is treated in a combined fat separator/bioreactor (1) with two different modes of operation used alternatively, at which:
a) the separator function is used during periods, when waste water is added;
b) the bio-reactor function is used during remaining periods;
c) changeover from separator to bio-reactor function is done by addition of a liquid culture of micro organisms containing living bacteria and/or fungi and breaking down fat, proteins and starch etc.; at which the liquid microbe culture is added and distributed by air injection in an intermediate layer between the sludge layer and the floating fat layer;
d) the air injection continues after addition of microbe culture to sustain the bio-reactor function; and
e) changeover from bioreactor to separator function is done by shutting off the air injection.

2. The process of claim 1 **characterised in that** the air injection is efficient enough to disperse the fat separated and accumulated during the separator function with waste water to increase the bio-availability of the fat.

3. The process of claim 1 or 2 **characterised in that** the microorganisms at least partly consist of fungi.

## Patentansprüche

1. Verfahren für die Trennung trennbarer Fette von fettenthaltendem Abwasser und Verminderung der Menge von abgetrennten Fetten die hantiert werden muss von Restauranten, Bäckerien, Lebensmittelindustrien usw. durch biologisches Abbauen mit Hilfe von einer flüssigen Kultur von Mikroorganismen *gekenzeichnet **dadurch**,* dass das fettenthaltende Abwasser in einem kombinierten Fettabscheider/bioreaktor (1) mit zwei verschiedenen Betriebsarten wechselweise benutzt behandelt wird, wobei:
a) die Abscheiderfunktion während den Perioden benutzt ist, wenn Abwasser zugesetzt ist;
b) die Bioreaktorfunktion während den übrigen Perioden benutzt ist;
c) der Wechsel von Abscheider- zu Bioreaktorfunktion gemacht wird durch Zusatz von einer flüssigen Kultur von Mikroorganismen enthaltend lebende bakterien und/oder Pilzen und Fett, Protein, Stärke usw. abbaut; wobei die flüssige Mikrobekultur zugesetzt und verteilt wird durch Lufteinspritzung in einer Zwischenschicht zwischen der Schlammschicht und der schwimmenden Fettschicht;
d) die Lufteinspritzung fortgesetzt nach Zusatz der Mikrobekultur wird, um die Bioreaktorfunktion aufrechterhalten; und
e) der Wechsel von Bioreactor- zu Abscheiderfunktion durch unterbrechen der Lufteinspritzung gemacht wird.

2. Das Verfahren des Anspruchs 1 *gekenzeichnet **dadurch**,* dass die Lufteinspritzung so gut leistungsfähig ist, dass das Fett das abgeschieden und akkumuliert ist während die Abscheiderfunktion wieder in Abwasser dispergiert wird, um die Biozugänglichkeit des Fettes zu verbessern.

3. Das Verfahren der Ansprüche 1 oder 2 *gekenzeichnet **dadurch**,* dass die Mikroorganismen mindesten teilweise aus Pilzen bestehen.

## Revendications

1. Procédé pour séparation séparable graisse d'eaux usées qui contient de la graisse et réduire la quantité de la graisse séparée, qui ont besoin de d'être enlevée, des restaurants, boulangeries, industries alimentaires etc. par biodégradation au moyen d'une culture liquide des microorganismes **caractérisée par** que d'eaux usées qui contienne de la graisse est traitée dans un séparateur/bio-réacteur combiné (1) avec deux modes différents d'opération utilisée alternativement, où:
a) la fonction séparatrice est utilisée pendant des périodes, quand d'eaux usées est additionné;
b) la fonction bio-réacteur est utilisée pendant des périodes restantes;
c) changement de la fonction de séparateur à bio-réacteur est faite par l'addition d'une culture liquide des microorganismes qui contient des bactéries et/ou fongus vivants qui peut décomposer de la graisse, de la protéine et de amidon etc.; où la culture liquide microbienne est additionnée et distribuée par injection de l'air dans une couche intermédiaire entre la couche du limon et la couche flottante de la graisse;
d) l'injection de l'air continue après l'addition de la culture microbienne pour entretenir la fonction bio-réacteur; et
e) changement de la fonction de bio-réacteur à séparateur est faite par interruption de l'injection de l'air.

2. Le procédé de la revendication 1 **caractérisée par** que l'injection de l'air est assez efficace pour disperser la graisse qui est séparée et accumulée pendant de la fonction comme separateur avec des eaux usées pour améliorer la bio-accessibilité de la graisse.

3. Le procédé des revendications 1 ou 2 **caractérisées par** que les microorganismes au moins partiellement consistent en fongus.
